# EUROPEAN PATENT APPLICATION

(11) **EP 2 143 743 A1**
(43) Date of publication of application: **13.01.2010**
(21) Application number: 08159950.8
(22) Date of filing: 08.07.2008
(51) Int. Cl.: C08G 18/00, C08F 220/00, C08G 63/00, C08G 65/00

(54) **Use of derivatives of dianhydrohexitol in the preparation of resins**

(71) Applicant: Akzo Nobel Coatings International B.V., 6824 BM Arnhem (NL)
(72) Inventor: Rood, Ignace Damiaan Christiaan, 6824 HL, ARNHEM (NL); Kruithof, Klaas Jan Hendrik, NL-2334 BG, Leiden (NL); Berg van den, Keimpe Jan, 2171 PS, SASSENHEIM (NL)
(74) Representative: Schalkwijk, Pieter Cornelis

(57) **Abstract**

This invention is directed to a method of preparing a resin characterized in that at least one ether, ester or ether-ester derivative of isosorbide, isomannide or isoidide is employed in said method as a solvent, co-solvent and / or coalescence agent.

## Description

### Field of the Invention

This invention relates to the use of ether, ester and ether-ester derivatives of the isomers of dianhydrohexitol as solvents, co-solvents and / or coalescence agents in the preparation of resins and coatings. More particularly, this invention relates to preparations of aqueous dispersions of resins, such as polyurethanes, in which dianhydrohexitol isomers are employed as solvents and / or coalescence agents.

### Background to the Invention

Aqueous coating compositions comprising water-thinnable or water-dispersible binders are well known in the art. Typical binders included in such compositions are polyaddition polymers, polyurethane, polyester, polyether, polyamide, polyurea, polyurethane-polyester, polyurethane-polyether, cellulose based binders and/or hybrid resins.

It is typical to prepare such resins in the form of organic solutions, employing solvents which are substantially non-reactive with regard to the particular polymerization reaction. Although it is not necessary to employ a solvent during the formation of such polymers, the use of a solvent may be desirable to maintain the reactants in the liquid state and to achieve a workable viscosity of that liquid. The solvent may also permit better temperature control during the polymerization reaction by serving as a heat sink and, where desired, as a refluxing medium. The optimum level for the solvent added in the polymer synthesis stage will depend somewhat on the degree to which the reaction (synthesis) mixture is agitated or comprises an emulsifying agent. However, the amount of solvent that is added in the polymer synthesis stage is typically in the range from 5% to 20 % by weight of the reaction mixture.

A large number of solvents have been used in this art, including: hydrocarbons such as pentane and hexane; chlorinated hydrocarbons; ethers such as ethylether (Et₂O), n-butyl ether, diphenyl ether, 1,4-dioxane, tetrahydrofuran (THF) and 2-methoxyethyl ether (diglyme); esters such as ethyl acetate, ethylene carbonate and propylene carbonate; ketoesters; ketones such as cyclohexanone, benzophenone, acetone and methyl ethyl ketone; sulfones such as dimethyl sulfone, diphenyl sulfone glycol-ether-esters; nitriles such as CH₃CN; and, aromatic compounds such as benzotrifluoride, terphenyl and naphthalene.

More specific examples of solvents include: Dimethyl sulfoxide (DMSO); Dimethylformamide (DMF), dimethylacetamide (DMA); aliphatic and alicyclic hydrocarbon pyrrolidones and, in particular, N-methyl-2-pyrrolidone (NMP); propylene glycol propyl ether (PGPE); propylene glycol methyl ether acetate (PGMEA); monoethylene glycol (MEG); isopropyl alcohol (IPA); propylene glycol n-butyl ether (PGBE), 2-methoxyethyl acetate, 2-ethoxyethyl acetoacetate, and propylene glycol methyl di-ether.

Despite being useful in the preparation of the resins, some of the above solvents may adversely affect the stability of an aqueous dispersion comprising such resins. At least a portion of such solvents is thus removed prior to dispersing the materials in water, ideally such that the level of the solvents in the final dispersion is <1.0 % by weight of the dispersion. Solvents having a lower boiling point than water are generally removed from the dispersion by thin film evaporation or vacuum distillation under controlled conditions which are not deleterious to the polymer.

However, some of these solvents exemplified above - in particular dimethyl formamide (DMF) and N-methyl-2-pyrrolidone (NMP) - have a higher boiling point than water. These solvents are generally retained in an aqueous dispersion of the resins, where they actually act to enhance the coalescence of the polymer particles during film formation.
Despite this benefit of using dimethyl formamide (DMF) both as a solvent in resin synthesis and as a coalescence agent in the aqueous dispersion of that resin, DMF is not readily disposed of by the human body and has been linked to cancer and birth defects in humans. Similarly, N-methyl-2-pyrrolidone (NMP) is classified by the State of California as a toxin known to cause reproductive and developmental toxicity.

### Statement of the Invention

In accordance with a first aspect of the invention there is provided a method of preparing a resin **characterized in that** at least one ether, ester or ether-ester derivative of isosorbide, isomannide, isoidide having respectively the general formulas (I), (II) and (III): 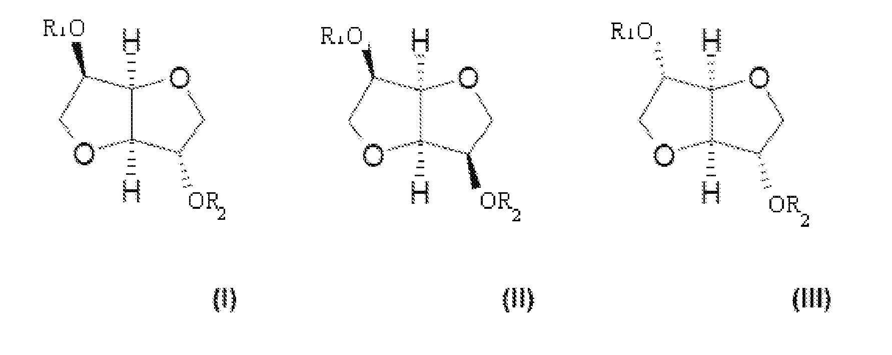 wherein R₁ and R₂ are independently a C₁ to C₁₂ organic group, is employed in said method as a solvent, co-solvent and / or coalescence agent.

Isosorbide, isomannide and isoidide are three isomers of dianhydrohexitol. These isomers may be obtained from starch as described in US Patent Application No. 2003204029 (DuPont de Nemours), the disclosure of which is herein incorporated by reference in its entirety. These isomers are thereby considered to be renewable and their use therefore is of environmental benefit when compared most prior art solvents. Furthermore, these isomers are not toxic.

Derivatives of the isomers of dianhydrohexitol that are useful in this invention include those ethers wherein R₁ and R₂ in general formulas (I), (II) and (III) are independently a C₁ to C₄ hydrocarbon group or carbonyl. For example, R₁ and R₂ may be independently selected from the group consisting of methyl, ethyl, n-propyl, isopropyl and butyl groups. Preferably, at least one of R₁ and R₂ is a methyl group. More preferably both R₁ and R₂ are methyl groups. Furthermore, it is most preferable that the solvent, co-solvent or coalescence agent used in the defined method comprises dimethylisosorbide (DMI).

The ether, ester and ether-ester derivatives of dianhydrohexitol should have purity between 95% and 100%. Preferably the purity should be greater than 98% and more preferably greater than 99%.

It is preferred that the prepared resin is dispersed in an aqueous medium. This dispersion need not take place after the termination of the polymer synthesis reaction. For example, a prepolymer, prepared in the presence of at least one derivative of dianhydrohexitol, may be dispersed in water wherein that prepolymer is extended by a further synthesis reaction. It is further preferred that the derivatives of the dianhydrohexitol employed in the resin or prepolymer synthesis are retained, at least in part, in the aqueous dispersion.

It is not intended to limit this invention to a particular type of resin. However, preferred resins are those which may be water-dispersible or water-thinnable and are suitable for use in aqueous coating compositions. More preferably the resin should be selected from the group consisting of: polyurethane resins; polyacrylate resins; polyester resins; polyether resins and hybrid resins. Most preferably the resin is a polyurethane resin.

It is envisaged that the uses of the ester, ether and ether-ester derivatives of the dianhydrohexitol isomers as solvents, co-solvents and coalescence agents need not be mutually exclusive. For example, in a given process, a derivative may be employed as both a (co-)solvent and a coalescence agent. This is particularly true in the production of a polyurethane dispersion: the compounds may act as a solvent in the preparation of an isocyanate-terminated prepolymer and as a coalescence agent when that prepolymer is chain extended to form the dispersion.

In accordance with a preferred embodiment of the invention there is provided a method for preparing an isocyanate-terminated polymer by reacting an excess of a polyisocyanate with an isocyanate- reactive component in the presence of a solvent comprising at least one ether, ester or ether-ester derivative of isosorbide, isomannide, isoidide having respectively the general formulas (I), (II) and (III): 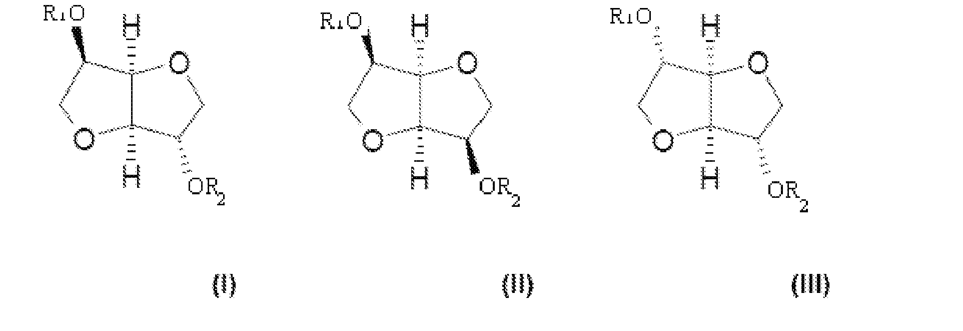 wherein R₁ and R₂ are independently a C₁ to C₁₂ organic groups.

In accordance with a further embodiment of the invention there is provided a method for preparing a polyurethane dispersion comprising the steps of:
a) preparing an isocyanate-terminated prepolymer by reacting an excess of a polyisocyanate with an isocyanate-reactive component in the presence of a solvent comprising at least one ether, ester or ether-ester derivative of isosorbide, isomannide, isoidide having respectively the general formulas (I), (II) and (III): 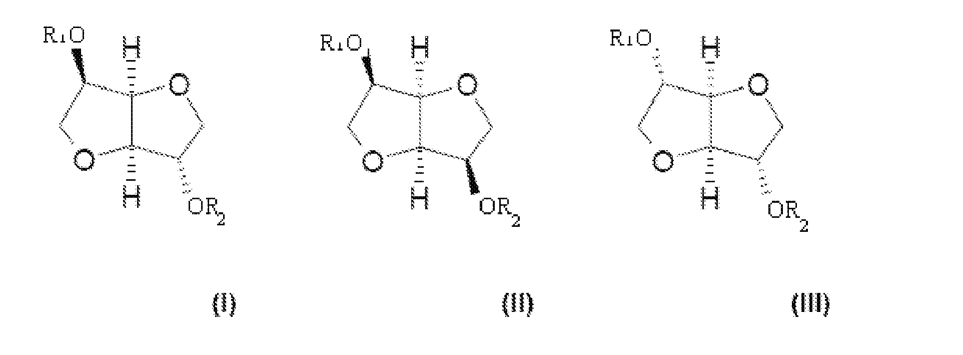 wherein R₁ and R₂ are independently a C₁ to C₁₂ organic groups;
b) optionally removing said solvent from the isocyanate-terminated prepolymer; and
c) reacting said prepolymer with a chain extending agent comprising primary and / or secondary amine functional compounds before, during or after mixing these reactants with an aqueous medium.

In accordance with a second aspect of the invention there is provided a water-borne coatings composition comprising a resin binder and at least one ether, ester or ether-ester derivative of isosorbide, isomannide, isoidide having respectively the general formulas (I), (II) and (III): 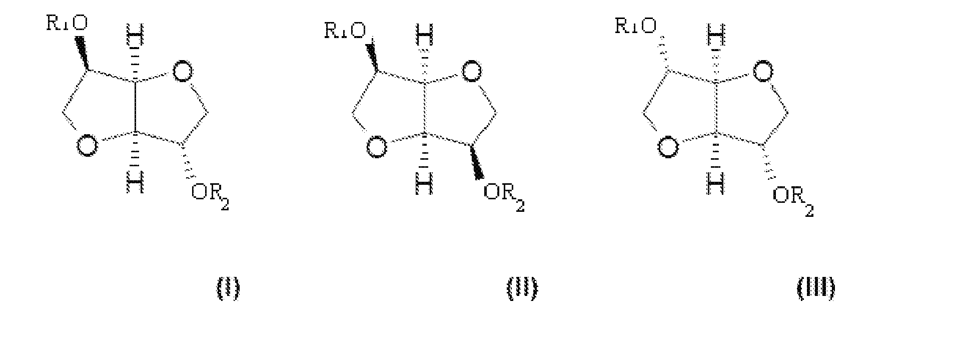 wherein R₁ and R₂ are independently a C₁ to C₁₂ organic group.

The defined aqueous coating compositions can also contain a variety of conventional additives including surfactants, antioxidants, pigments, ultraviolet light absorbers, stabilizers, additional coalescing agents and rheology-controlling additives, such as the phyllosilicates disclosed in EP-A-0038127 and DE-A-3707388.

Conventional coloring or special effect pigments that do not react with or dissolve in water may be based on inorganic or organic compounds. Examples of suitable coloring pigments based on inorganic compounds are titanium dioxide, iron oxides, carbon black and the like. Examples of suitable coloring pigments based on organic compounds are Indanthrene blue, Cromophthal red, Irgazine orange, Sicotrans yellow, Heliogen green and the like. Examples of suitable special-effect pigments are commercial and chromated aluminum bronzes, commercial stainless steel bronzes, metal platelets, metal flake pigments, pearluster pigments and interference pigments.

The aqueous coating compositions of this invention can be applied to a very wide variety of substrates, such as metal, wood, plastic or paper. The aqueous coating compositions are particularly suitable for the repair painting of damaged areas, especially for automotive refinishing. In this case, the coating compositions are applied to the damaged area which has been prepared appropriately - by filling and surfacing for example - using customary methods such as spraying.

One or more of the above defined aqueous coating compositions can be employed in multilayer coating systems such as the systems used in the coating of automobiles or other transport vehicles. An aqueous coating composition according to this invention may be employed as the pigmented coating and / or the unpigmented coating in a "base coat/clear coat" system.

The aqueous coating compositions of this invention may be crosslinked by adding a crosslinker to the dispersion at, or shortly before, the time it is applied to a substrate and dried. Crosslinking may be accomplished with conventional dispersible crosslinkers as are known in the art. Isocyanate-functional crosslinkers and melamine based crosslinkers may be specifically mentioned.

### Detailed Description of the Invention

The resins of this invention are prepared in the form of organic solutions, employing those of the solvents of this invention which are substantially non-reactive with regard to the particular polymerization reaction. The minimum level for the solvent added in the polymer synthesis stage will depend somewhat on the degree to which the reaction (synthesis) mixture is agitated or comprises an emulsifying agent. However, the amount of solvent that is added in the resin synthesis stage is typically in the range from 5% to 20 % by weight of the reaction mixture.

It is envisaged that the ether, ester and ether-esters of dianhydrohexitol may be employed with other solvents in the polymer reaction mixture. The co-solvents that may be employed are not particularly limited and include any solvent commonly used in resin synthesis, such as those mentioned in the background to this invention. However, where co-solvents are present these should replace less than 80 molar %, preferably less than 60 molar %, more preferably less than 40 molar % and most preferably less than 20 molar % of the derivative of the dianhydrohexitol isomer(s).

The prepared resin may be dispersed in an aqueous medium. This dispersion need not take place after the termination of the polymer synthesis reaction. For example, a prepolymer, prepared in the presence of at least one derivative of dianhydrohexitol, may be dispersed in water wherein that prepolymer is extended by further reaction. As mentioned above, the derivatives of the dianhydrohexitol employed in the resin or prepolymer synthesis may be retained - and are preferably retained at least in part - in the aqueous dispersion. The content of the dianhydrohexitol derivatives and any other organic solvents present may be controlled by distillation of the dispersion or emulsion, optionally under reduced pressure.

For each of the below described resins, the dispersion or dissolution of the resins in water may be facilitated using external emulsifiers or by ionic or and / or non-ionic stabilizing groups built in to the resin. Suitable external emulsifiers include anionic emulsifiers, such as carboxylate-, sulphonate-, and phosphonate-containing compounds, cationic emulsifiers such as amine/ammonium groups, and non-ionic emulsifiers based on alkylene oxide groups. Suitable ionic stabilizing groups - which can be built into the resin during its preparation - can be derived from carboxylic acid groups, sulphonic acid groups, phosphorous acid groups, phosphoric acid groups, and phosphonic acid groups. Suitable non-ionic stabilizing groups which can be similarly built into the resin include C₁-C₄ alkoxy polyalkylene oxide groups.

The preferred alkylene oxide groups in the emulsifiers or the non-ionic stabilizing groups built into the resin are ethylene oxide groups, but propylene oxide groups or mixtures of ethylene oxide groups and propylene oxide groups are useful as well. For example, the alkylene oxide groups may be C₁-C₄ alkoxy ethers of polyalkylene glycols represented by the formula I: 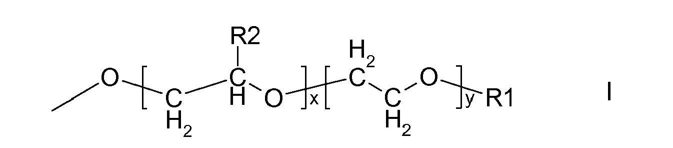 Wherein:
R1 is a hydrocarbon radical with 1 to 4, preferably 1 or 2, carbon atoms;
R2 is a methyl group;
x is between 0 and 40, preferably between 0 and 20, most preferably between 0 and 10;
y is between 0 and 50; and,
(x + y) is between 2 and 50, preferably between 2 and 25.
Examples are C₁-C₄ alkoxy polyC₂(C₃)alkylene oxide glycol and/or C₁-C₄ alkoxy polyC₂(C₃)alkylene oxide 1,3-diol, wherein polyC₂(C₃)alkylene oxide stands for polyethylene oxide, optionally comprising propylene oxide units.

### 1. RESINS

Particularly preferred resins which can be prepared in the presence of the solvent, co-solvents and co-alescence agents of the present invention include water-thinnable or water-dispersible polyurethane resins, polyaddition polymer resins, polyester, polyether resins and hybrid resins.

### 1.1 POLYACRYLATE RESINS

In accordance with this invention the polyaddition polymer resin is prepared by the polymerization - such as the free radical initiated polymerization of suitable monomers in an essentially non-aqueous environment in the presence of the ether, ester or ether-ester derivative(s) of a dianhydrohexitol isomer. Suitable polyaddition polymer resins include (co)polymers of ethylenically unsaturated monomers. For example, suitable water-thinnable or water-dispersible polyacrylate resins which can be prepared in the form of a solutions in the dianhydrohexitol derivatives are described *inter alia* in DE-A 38 32 826 (BASF Lacke & Farben). Furthermore, core shell (meth)acrylate addition polymers, as described in detail in EP-A-0 287 144 and WO 99/67339, may also be prepared in the presence of the ether, ester and ether-ester derivatives of isosorbide, isomannide and isoidide. For core-shell (meth)acrylate addition polymers, the polymerization may occur in two stages using distinct monomer mixtures as is known in the art: one or both of the polymerization steps may occur in the presence of the defined dianhydrohexitol derivatives.

In a further step, the polyaddition polymer resin may be mixed with an aqueous medium by adding water to the polyaddition polymer or, alternatively, by adding the polyaddition polymer to water, under agitation.

The terms (meth)acrylate and (meth)acrylic acid below refer to methacrylate and acrylate, as well as methacrylic acid and acrylic acid, respectively. Examples of suitable ethylenically unsaturated monomers used to form the (meth)acrylate addition polymers are: (meth)acrylic acid, methyl (meth)acrylate, ethyl (meth)acrylate, propyl (meth)acrylate, isopropyl (meth)acrylate, butyl (meth)acrylate, 2-ethylhexyl (meth)acrylate, octyl (meth)acrylate, isobornyl (meth)acrylate, dodecyl (meth)acrylate, cyclohexyl (meth)acrylate, other (meth)acrylic monomers such as 2-methoxyethyl (meth)acrylate, 2-ethoxyethyl (meth)acrylate, 3-methoxypropyl (meth)acrylate; hydroxyalkyl (meth)acrylates, e.g. 2-hydroxyethyl (meth)acrylate, 2-hydroxypropyl (meth)acrylate, 4-hydroxybutyl (meth)acrylate, 6-hydroxyhexyl (meth)acrylate, p-hydroxycyclohexyl (meth)acrylate, hydroxypolyethylene glycol (meth)acrylates, hydroxypolypropylene glycol (meth)acrylates, and the corresponding alkoxy derivatives thereof; epoxy (meth)acrylates, such as glycidyl (meth)acrylate; (meth)acrylamide, (meth)acrylonitrile, and N-methylol (meth)acrylamide; N-alkyl (meth)acrylamides, such as N-isopropyl (meth)acrylamide, N-t-butyl (meth)acrylamide, N-t-octyl (meth)acrylamide, N,N-dimethyl aminoethyl (meth)acrylate, and N,N-diethyl aminoethyl (meth)acrylate.

In preparing the polyaddition polymer resins the above (meth)acryl monomers may optionally be used in combination with comonomers such as mono- and diesters of maleate or fumarate, such as dibutyl maleate, dibutyl fumarate, 2-ethylhexyl maleate, 2-ethylhexyl fumarate, octyl maleate, isobornyl maleate, dodecyl maleate, cyclohexyl maleate, and the like, and/or with a vinyl derivative such as styrene, vinyl toluene, α-methyl styrene, vinyl naphthalene, vinyl chloride, vinyl acetate, vinyl pyrrolidone, vinyl laurate, vinylneododecanoate, N-vinyl formamide, and vinyl propionate, and/or with monomers containing one or more urea or urethane groups.

Furthermore, mixtures of these monomers or adducts can also be used. Preferred (co)monomers are alkyl (meth)acrylates, such as methyl (meth)acrylate, ethyl (meth)acrylate, butyl (meth)acrylate, styrene, and mixtures thereof.

### 1.2 POLYESTER RESINS

Polyester resins which may be prepared in accordance with the invention include the condensation products of a carboxylic acid or a reactive derivative thereof, such as the corresponding anhydride or lower alkyl ester with an alcohol. The reactive monomers are dissolved in a solvent comprising at least one ether, ester or ether-ester derivative of isosorbide, isomannide or isoidide

Examples of suitable polycarboxylic acids or reactive derivatives thereof are tetrahydrophthalic acid, tetrahydrophthalic anhydride, hexahydrophthalic acid, hexahydrophthalic anhydride, methyl hexahydrophthalic acid, methyl hexahydrophthalic anhydride, dimethyl cyclohexane dicarboxylate, 1,4-cyclohexane dicarboxylic acid, 1,3-cyclohexane dicarboxylic acid, phthalic acid, phthalic anhydride, isophthalic acid, terephthalic acid, 5-tert. butyl isophthalic acid, trimellitic anhydride, maleic acid, maleic anhydride, fumaric acid, succinic acid, succinic anhydride, hydroxy succinic acid, dodecenyl succinic anhydride, dimethyl succinate, glutaric acid, adipic acid, dimethyl adipate, azelaic acid, and mixtures thereof. Examples of suitable monocarboxylic acids include hexanoic acid, heptanoic acid, octanoic acid, nonanoic acid, 2-ethyl hexanoic acid, isononanoic acid, decanoic acid, lauric acid, myristic acid, palmitic acid, isostearic acid, stearic acid, hydroxystearic acid, benzoic acid, tert.-butyl benzoic acid, lactic acid, dimethylol propionic acid, and mixtures thereof. Suitable alcohols are the same as described below for polyurethane preparation.

### 1.3 POLYETHER RESINS AND HYBRID RESINS

As suitable polyether resins may be mentioned the polymers of cyclic ethers such as ethylene oxide, propylene oxide, other epoxides, oxetane, and tetrahydrofuran.

Suitable hybrid resins are described in WO 01/90265 (Akzo Nobel NV) which is included in this application by reference.

### 1.4 POLYURETHANE RESINS

Polyurethane resins are prepared by the reaction of a polyfunctional isocyanate with a polyfunctional alcohol to form urethane linkages (-NHCOO-) optionally in the presence of further polyactive hydrogen compounds such as polyfunctional amines and mercaptans.

More particularly, polyurethane resins can be prepared by reacting a stoichiometric amount or an excess of the organic polyisocyanate with the other reactants at a temperature between about 30°C and about 130°C until the reaction between the isocyanate groups and the isocyanate-reactive groups is substantially complete. The takes place under substantially anhydrous conditions characterized in this invention in that at least one ether, ester or ether-ester derivative of dianhydrohexitol is present as a solvent or co-solvent.

The reactants are generally used in proportions corresponding to a ratio of isocyanate groups to isocyanate-reactive groups of from about 1:3 to about 6:1, preferably about 1:1. If an excess of the organic polyisocyanate is used, an isocyanate-terminated prepolymer can be prepared in a first step. In a second stage, the isocyanate terminated prepolymer is chain extended and terminated by reaction with a further isocyanate reactive compound, such as primary or secondary amine functional compounds. A dispersion of the polyurethane resin may be prepared by mixing the reaction mixture with an aqueous medium before, during or after the second stage.

In addition to the defined solvents of this invention, it is herein preferred that the isocyanate terminated prepolymer is prepared from a reaction mixture comprising at least one diisocyanate, at least one difunctional polyol, at least one further isocyanate reactive compound, a neutralizing agent, optionally a chain terminating agent and optionally a catalyst. The reaction occurs using a stoichiometric excess of the at least one diisocyanate relative to the at least one difunctional polyol and the at least one isocyanate reactive compound to produce an oligomer which may contain urethane and urea functional groups. The amount of at least one diisocyanate within the isocyanate terminated prepolymer may range from about 20% to about 30% by weight of the overall reaction mixture. The amount of at least one polyol within the isocyanate terminated prepolymer may range from about 65% to about 75% by weight of the reaction mixture.

Broadly, the diisocyanate compounds may include: aromatic, cycloaliphatic and aliphatic diisocyanates; partly masked polyisocyanates; polyisocyanates partly reacted, for example, with phenols, tertiary butanol, phthalimide and caprolactam; chlorinated and brominated diisocyanates; and, sulfur and phosphorus-containing diisocyanates.

Suitable examples of diisocyanates, which may be used alone or in admixture, include but are not limited to: meta-tetramethylxylene diisocyanate (TMXDI ); isophorone diisocyanate (IPDI) and derivatives thereof; tetramethylene diisocyanate, hexamethylene diisocyanate (HDI) and derivatives thereof; trimethyl hexamethylene diisocyanate; 2,4-toluene diisocyanate, 2,6-toluene diisocyanate; dimethylbenzyl isocyanate; 4,4'dicyclohexylmethane diisocyanate (H12MDI); benzene 1,3-bis (1-isocyanato-1-methylethyl); 1-5 naphthalene diisocyanate (NDI); p-phenylene diisocyanate (PPDI); trans-cyclohexane-1,4-diisocyanate; bitolylene diisocyanate (TODI); dimeric tolylene diisocyanate; 4,4'-diphenylmethane diisocyanate; 4,4'-diphenyl dimethyl methane diisocyanate; di- and tetraalkyl diphenyl methane diisocyanate; 4,4'-dibenzyl diisocyanate; 1,3-phenylene diisocyanate; 1,4-phenylene diisocyanate; the isomers of tolylene diisocyanate; 1-methyl-2,4-diisocyanatocyclohexane; 1-isocyanatomethyl-3-isocyanatomethyl-3-isocyanato-1 ,5,5-trimethyl cyclohexane; cyclohexane-1,4-diisocyanate; 1,2-diisocyanatododecane; 1,6-diisocyanato-2,2,4-trimethyl hexane; 1,6-diisocyanato-2,4,4-trimethyl hexane; tetramethoxy butane-1,4-diisoyanate, butane-1,4-diisocyanate, hexane-1,6-diisocyanate, dicyclohexyl methane diisocyanate; ethylene diisocyanate; phthalic acid-bis-isocyanatoethyl ester; 4,4'-diisocyanatophenyl perfluoroethane; 1-chloromethylphenyl-2,4-diisocyanate; 1-bromomethylphenyl-2,6-diisocyanate; 3,3-bis-chloromethylether-4,4'-diphenyl diisocyanate; and dimer fatty acid diisocyanate,

The isocyanate is used in an amount such that the isocyanate index (i.e., the ratio of equivalents of isocyanate groups to equivalents of isocyanate-reactive groups) is from 0.9 to 2.5, preferably from 1.0 to 1.5. The isocyanate should have an average functionality of from 2.0 to 3.2, preferably from 2.2 to 3.0 isocyanate moieties per molecule, and an NCO content of from 25 to 35% by weight.
As used herein, the term "polyol" refers to any organic compound having 2 or more hydroxyl groups that are capable of reacting with an isocyanate group. Generally the polyols should be substantially linear with a molecular weight in the range from 300 to 20,000, preferably in the range from 400 to 6,000 and more preferably in the range from 500 to 2,500.The polyols may be members of any of the chemical classes of polymeric polyols used or proposed for use in polyurethane formulations known in this art. Preferred polyols are polyesters, polyacetals, polycarbonates, polyethers, polythioethers, polyamides and/or polyester amides containing on average 2 to at most 4 hydroxyl groups.

Polycarbonate polyols are understood to be polyesters prepared by esterification of carbonic acid with dihydric or polyhydric alcohols and which bear a hydroxyl group at either end of the chain. Although cyclic and branched alcohols may be employed, it is preferred that the alcohols - and therefore ultimately the polycarbonates - have a linear aliphatic structure. Equally, although polyhydric alcohols - such as trihydric glycerol - may be employed in this invention - dihydric alcohols are preferred, particularly if they contain between four and ten carbon atoms and / or are -OH terminated.

Suitable polyether polyols include the polymerization products of ethylene oxide, propylene oxide, butylene oxide or tetrahydrofuran by the addition of one or more such oxides to polyfunctional initiators such as water, ethylene glycol, propylene glycol, diethylene glycol, cyclohexane dimethanol, glycerol, trimethylol-propane, pentaerythritol or Bisphenol A. Polyether polyols obtained by alkoxylation of polyhydric alcohols, amines, polyamines and aminoalcohols may also be employed.

Suitable polyacetals include compounds obtainable from glycols, such as diethylene glycol, triethylene glycol, hexanediol and formaldehyde. Equally, suitable polyacetals may be prepared by polymerization of cyclic acetals.

Among suitable polythioethers, the condensates of thiodiglycol on its own and/or with other glycols, dicarboxylic acids, formaldehyde, aminocarboxylic acids or aminoalcohols may be used in particular. Depending on the co-components, the products are polythioethers, polythio mixed ethers, polythioether esters and polythioether ester amides. Polyhydroxyl compounds such as these may also be used in alkylated form or in admixture with alkylating agents.

The polyester polyols, polyesteramide and polyamide polyols include the predominantly linear condensates obtained from polybasic, saturated and unsaturated carboxylic acids or their anhydrides and polyhydric, saturated and unsaturated alcohols, aminoalcohols, diamines, polyamines and mixtures thereof and also, for example, polyterephthalates. Polyesters of lactones, for example caprolactone, or of hydroxycarboxylic acids may also be used. The polyesters may contain terminal hydroxyl or carboxyl groups. Relatively high molecular weight polymers or condensates such as, for example, polyethers, polyacetals, polyoxymethylenes may also be (co-) used as alcohol component in their synthesis.

Polyhydroxyl compounds already containing urethane or urea groups and optionally modified natural polyols, such as castor oil, may also be used in this invention. Basically, polyhydroxyl compounds containing basic nitrogen atoms such as, for example, polyalkoxylated primary amines or polyesters or polythioethers containing alkyl diethanolamine in co-condensed form may also be used. Polyols obtainable by complete or partial ring opening of epoxidized triglycerides with primary or secondary hydroxyl compounds, for example the reaction product of epoxidized soybean oil with methanol, are also suitable. Copolymers of the polyhydroxyl compounds mentioned are also suitable, as are their analogs preferably terminated by amino or sulfide groups.

In accordance with one embodiment of the invention the polyol is a difunctional polyol selected from the group consisting of polyethylene glycol, polypropylene glycol (PPO), polytetramethylene glycol (PTMEG) and mixtures thereof. More preferably the polyol comprises at least 75 wt.%, for example at least 95 wt.% of polypropylene glycol (PPO) having a molecular weight of around 2,000, based upon the total weight of the at least one polyol in the reaction mixture.

As is known in the art the potentially ionic groups, such as acid groups, present in one or more of the isocyanate reactive compounds may be neutralized via one or more neutralizing agents. In certain preferred embodiments, the neutralizing step is conducted prior to the dispersing step. Without being bound by theory, the amount of neutralizing agent that is used is important in affecting the aqueous polyurethane dispersion; too much neutralization may result in a water soluble polymer that yields a polymer solution rather than dispersion; too little neutralization may result in an unstable dispersion. The amount of neutralizing agent present may range from 1.75% to 3.75%, preferably from 1.9% to 3.25%, and more preferably from 2.0% to 2.5% by weight of the overall reaction mixture. In a preferred embodiment of the invention, the amount of neutralizing agent added is sufficient to react with between 50 and 105 mol. % of the acid groups contained within the isocyanate reactive compound.

Suitable neutralizing agents include: inorganic bases such as potassium hydroxide and lithium hydroxide; and, tertiary amines such as triethylamine, tri butyl amine, monoethyl diproyl amine, mono-ethyl dibutyl amine, diethyl monopropyl amine, and diethyl monobutyl amine.

The ratio between the amount of amine from a neutralizing agent and the acid functional groups from the isocyanate reactive compound (the "N/COOH ratio") can provide one means of controlling the molecular weight of polyurethane polymer contained within the eventual aqueous polyurethane dispersion. Where a tertiary amine is employed as a neutralizing agent the molar equivalent ratio of tertiary amine to the carboxylic acid in the isocyanate reactive compound should preferably be in the range from 0.5:1 to 1:1 N/COOH, and more preferably from 0.5:1 to 0.75:1 N/COOH.

Optionally, the reaction mixture during the prepolymer formation and the chain extension and termination reactions may further comprise a catalyst to shorten the overall reaction time. Suitable catalysts include: tin based materials such as di-butyl tin dilaurate, dibutylbis(laurylthio)stannate, dibutyltinbis(isooctylmercaptoacetate), tin octoate, and dibutyltinbis(isooctylmaleate); tertiary amines such as 1,4-diazabicyclo[2.2.2]octane (DABCO), pentametyldipropylenetriamine, bis(dimethylamino ethyl ether), pentamethyldiethylenetriamine, phenol salt of 1,8-diazabicyclo[5.4.0]undecene-7 (DBU phenol salt commercially available as U-CATSAI, made by Sun Apro K.K.), dimethylcyclohexylamine, 2,4,6-tris(N,N-dimethylaminomethyl)phenol (DMT-30), 1,3,5-tris(3-dimethylaminopropyl)hexahydro-s-triazine; and, ammonium salts.

In a preferred embodiment of the invention, the amount of the catalyst present during the reaction is in the range from 0.02% to 0.08 %, preferably from 0.04% to 0.07%, and more preferably from 0.055% to 0.065% by weight of the overall reaction mixture.

The isocyanate terminated prepolymer is typically prepared in a suitable reactor wherein the reactants are suitably combined, mixed, and reacted in the solvent medium, and wherein heat may be transferred into, and away from, the reactor. The synthesis of the isocyanate terminated prepolymer is preferably conducted in an atmosphere that minimizes or eliminates the introduction of water into the reaction mixture such as a nitrogen and/or inert atmosphere. The reactants may be added "neat" or within an aqueous and/or non-aqueous based solution. The reactants may be added into the reactor continuously, gradually over time (such as in a semi-batch process) or batch-wise. Preferably the reactants are gradually added to the reactor.

After the isocyanate terminated prepolymer is prepared, the prepolymer is then dispersed in water. The isocyanate terminated prepolymer/reaction mixture may be dispersed in water using techniques well known in the art. In certain preferred embodiments, the reaction mixture is added to the water with agitation or, alternatively, water may be stirred into the mixture. In the dispersing step, it is preferred that the prepolymer be added to water rather than adding water to the prepolymer. After and/or during the dispersing step, one or more chain extending agents is added and allowed to react to provide the aqueous polyurethane dispersion.

The primary or secondary amine functional compounds employed as chain extenders in this invention should be water soluble in order to increase the dispersibility of the polymer end product in water.

Water soluble organic diamines - including aliphatic, cycloaliphatic and aromatic diamines - are preferred because they generally provide the maximum increase in molecular weight through chain extension without causing gelling of the poly(urethane/urea) dispersion. Suitable organic diamines include: ethylenediamine (EDA); propylenediamine; 1,4-butylenediamine; piperazine; 1,4-cyclohexyldimethyldiamine; hexamethylenediamine (HDA); N-methylpropylenediamine; diaminophenylsulfone; diaminodiphenylether; diaminodiphenyldimethylmethane; 2,4-diamino-6-phenyltriazine; isophoronediamine (IDA); dimer fatty acid diamine; N-isodecycloxy propyl-1,3-diaminopropane; and, imidazolidinone functional diamines.

Polyamine compounds having terminal primary amine groups as well as internal secondary amine groups, such as diethylene triamine (DETA) and triethylene tetraamine, may also be employed as chain extenders. Some crosslinking in the dispersed poly(urethane/urea) polymer may be provided through the secondary amine of such compounds, but such crosslinking can be kept low by appropriate stoichiometric adjustments.

The molecular weight of polyurethane polymer contained within the aqueous polyurethane dispersion may be controlled by adding at least one chain terminating agent to the reaction mixture. Useful chain terminators include mono alcohols.

The different reactions (or steps) within each of the two general stages of producing a polyurethane dispersion may be conducted sequentially. However, the steps in either or both stages may be performed in a variety of different orders. For example, the addition of the neutralizing agent ("neutralizing step") may be conducted during at least a portion of the reaction between the polyisocyanate and the isocyanate-reactive components ("reacting step"). Alternatively the neutralizing step may be conducted during at least a portion of the later dispersion of the prepolymer in water ("dispersing step"). In addition, the reacting step may be conducted during at least a portion of the chain extending step.

### Examples

### a) Preparation of a Polyester Polyol

A equimolar mixture (1:1:1:1:1) was prepared by mixing 1023.4g of adipic acid (ADA), 1079.21g of hexahydrophthalic anhydride (HHPA), 827.26g of 1,6-hexane diol (HD), 729.05g of neopentyl glycol (NPG) and 1009.4g of 1,4-dimethylcyclohexane (DMCH). 2.33g of FASTCAT 4100 catalyst and 3.51g of triphenyl phosphate (TPP) were also added to this mixture.

The mixture was heated to 100°C at the same time as being purged with nitrogen gas, the mixture becoming clear and homogeneous. This mixture was then further heated in a two stage process: in a first stage the temperature was raised to approximately 150°C; in a second stage the temperature was gradually increased to 230°C with mild water distillation. Once the water distillation stopped, the reaction mixture was again purged with nitrogen gas at a rate of 1.5 liters per minute. The mixture was then allowed to react until the acid number (AN) was in the range between 0.5 and 1 after which it was allowed to cool.

The polyester polyol yield of this reaction was 4296g, the reaction also yielding 378g of water. The resultant polyester polyol was clear and colourless. It was further characterized by having an acid number (AN) of 0.3mg KOH/g, a number averaged molar mass (Mn) of 956 and a weight averaged molar mass (Mw) between 1679 and 1727, the polydispersity (PDI) thereby being between 1.76 and 1.81.

### b) Preparation of a Polyurethane Dispersion Using Dimethyisosorbide as a Solvent and Coalescence Agent

A 0.5 liter reactor was charged with a mixture shown in Table I:

**Table 1**

| Amount (g) | Component | Product and / or Availability |
|---|---|---|
| 75.09 | Polyester Polyol from Example a) | |
| 1.59 | Trimethylol propane (TMP) | |
| 2.71 | Dimethylol propionic acid (DMPA) | |
| 11.32 | Poly-ethyleneglycol-monomethylether (MPEG1000) | Available from Ineos |
| 59.29 | 4,4'dicyclohexylmethane diisocyanate (H12MDI) | Desmodur W available from Bayer. |
| 80.77 | Dimethylisosorbide (DMIS) | Available from Roquette |

The reactor was heated to 65°C and the contents stirred until all the materials were dissolved. 0.15g of di-butyl tin dilaurate (DBTL) was added and the mixture heated to 85°C for 3 hours to achieve a conversion between 97 and 99%.

The mixture was cooled down to between 45 and 50°C after which 1.62g of dimethylethalonamine (DMEA) was added. The mixture was again allowed to cool to between 35 and 40°C before being emulsified with 282g of demineralised water at this temperature. After the emulsification was complete the mixture was stirred for 5 minutes.

Without removing the dimethylisosorbide solvent and over a period of 1 minute, a chain extender comprising 5.1g of isophorone diamine (IPDA) and 20g of demineralised water was added to the mixture, which was subsequently warmed to 60°C and maintained at that temperature for 2 hours. The resultant product was filtered through a 80µm filter.

The isocyanate-terminated prepolymer resin (obtained prior to chain extension with IPDA) was characterized by having a number averaged molar mass (Mn) of 6077 and a weight averaged molar mass (Mw) of 15349, the polydispersity (PDI) of the resin thereby being 2.53.

The resultant emulsion had a brownish, transparent appearance and a solids contents of 32% (as measured for 30 minutes at 140°C). The average particle size of the emulsion was 75 nm as measured by light transmission using a Coulter Counter.

The polyurethane of the dispersion was further characterized by having a number averaged molar mass (Mn) of 13893 and a weight averaged molar mass (Mw) of 76927, the polydispersity (PDI) thereby being 5.56.

## Claims

1. A method of preparing a resin **characterized in that** at least one ether, ester or ether-ester derivative of isosorbide, isomannide, isoidide having respectively the general formulas (I), (II) and (III): 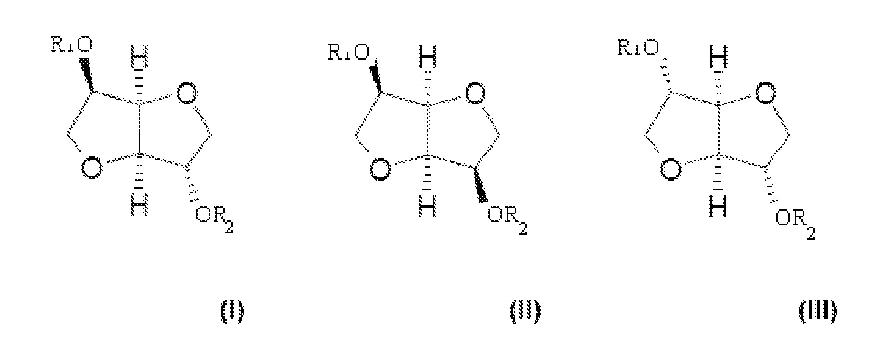 wherein R₁ and R₂ are independently a C₁ to C₁₂ organic group, is employed in said method as a solvent, co-solvent and / or coalescence agent.

2. The method according to claim 1, wherein R₁ and R₂ in general formulas (I), (II) and (III) are independently a C₁ to C₄ hydrocarbon group or carbonyl.

3. The method according to claim 2, wherein R₁ and R₂ are independently selected from the group consisting of methyl, ethyl, n-propyl, isopropyl and butyl groups.

4. The method according to claim 3, wherein at least one of R₁ and R₂ is a methyl group.

5. The method according to claim 4, wherein both R₁ and R₂ are methyl groups.

6. The method according to claim 1, wherein said solvent, co-solvent or coalescence agent comprises dimethylisosorbide (DMI).

7. The method according to any one of claims 1 to 6, wherein the prepared resin is dispersed in an aqueous medium.

8. The method according to any one of claims 1 to 7, wherein said resin is selected from the group consisting of: polyurethane resins; polyacrylate resins; polyester resins; polyether resins and hybrid resins.

9. The method according to claim 8, wherein said resin is a polyurethane resin.

10. A method for preparing an isocyanate-terminated polymer by reacting an excess of a polyisocyanate with an isocyanate- reactive component in the presence of a solvent comprising at least one ether, ester or ether-ester derivative of isosorbide, isomannide, isoidide having respectively the general formulas (I), (II) and (III): 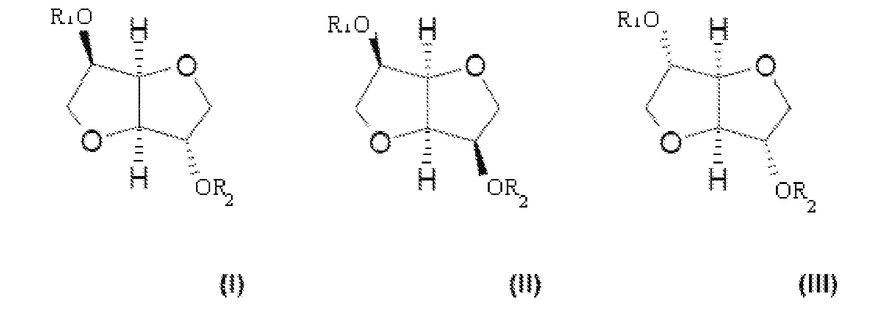 wherein R₁ and R₂ are independently a C₁ to C₁₂ organic groups.

11. A method for preparing a polyurethane dispersion comprising the steps of:
a) preparing an isocyanate-terminated prepolymer by reacting an excess of a polyisocyanate with an isocyanate-reactive component in the presence of a solvent comprising at least one ether, ester or ether-ester derivative of isosorbide, isomannide, isoidide having respectively the general formulas (I), (II) and (III): 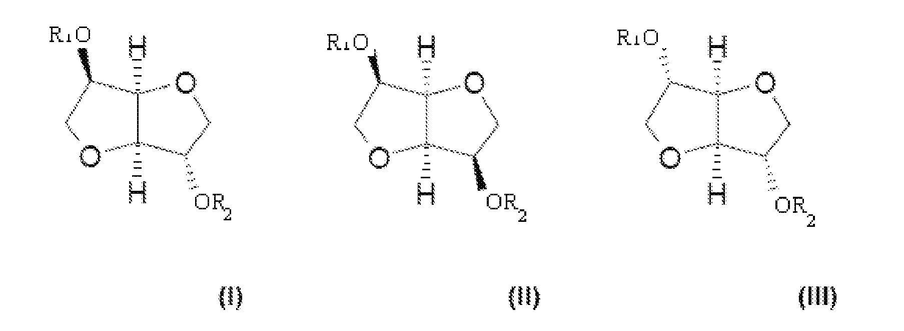 wherein R₁ and R₂ are independently a C₁ to C₁₂ organic groups;
b) optionally removing said solvent from the isocyanate-terminated prepolymer; and
c) reacting said prepolymer with a chain extending agent comprising primary and / or secondary amine functional compounds before, during or after mixing these reactants with an aqueous medium.

12. A water-borne coatings composition comprising a resinous binder and at least one ether, ester or ether-ester derivative of isosorbide, isomannide, isoidide having respectively the general formulas (I), (II) and (III): 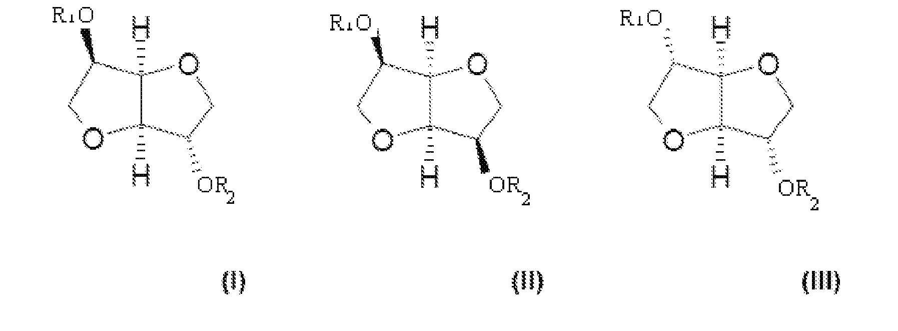 wherein R₁ and R₂ are independently a C₁ to C₁₂ organic group.

13. A water-borne coatings composition according to claim 12, further comprising at least one pigment.

14. A water-borne coatings composition according to claim 12 which is a clear coating composition.

15. Use of at least one ether, ester or ether-ester derivative of isosorbide, isomannide, isoidide having respectively the general formulas (I), (II) and (III): 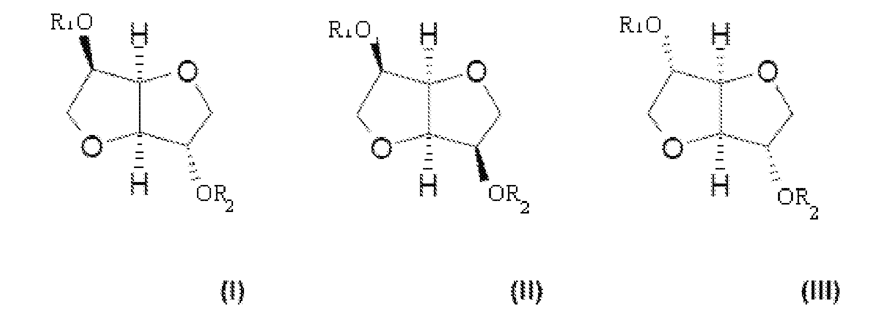 wherein R₁ and R₂ are independently a C₁ to C₁₂ organic group, as co-solvent or coalescence agent in a water borne coating composition.
